# EUROPÄISCHE PATENTSCHRIFT

(11) **EP 2 404 773 B1**
(45) Veröffentlichungstag und Bekanntmachung des Hinweises auf die Patenterteilung: **09.01.2013**
(21) Anmeldenummer: 11005416.0
(22) Anmeldetag: 01.07.2011
(51) Int. Cl.: B60J 7/06

(54) **Faltverdeck für einen Personenkraftwagen**
Collapsible roof for a passenger vehicle
Toit escamotable pour un véhicule de transport de passagers

(30) Priorität: 07.07.2010 DE 102010027197
(43) Veröffentlichungstag der Anmeldung: 11.01.2012
(73) Patentinhaber: Magna Car Top Systems GmbH, 74321 Bietigheim-Bissingen (DE)
(72) Erfinder: Klausmann, Michaela, 71522 Backnang (DE); Schmälzle, Rüdiger, 74357 Bönnigheim (DE); Käsweber, Hubert, 71636 Ludwigsburg (DE); Fischer, Thomas, 72074 Tübingen (DE)
(74) Vertreter: Völger, Silke Beatrix

(56) Entgegenhaltungen:
- EP-A2- 0 336 414
- DE-A1- 2 535 131
- US-A- 2 987 331
- US-A1- 2004 051 347

## Beschreibung

Die Erfindung bezieht sich auf ein Faltverdeck für einen Personenkraftwagen mit einem ein Dach aufweisenden Aufbau, nach dem Oberbegriff des Patentanspruchs 1.

Es ist eine Faltdachmechanik für ein Faltdach eines Fahrzeugs bekannt, DE 196 09 917 C1, welches Faltdach eine Dachöffnung in einem Dach eines Aufbaus des Fahrzeugs abdeckt. Zu beiden Längsseiten der Dachöffnung sind längs verlaufende Führungsschienen vorgesehen, in denen Gleitelemente verschiebbar gelagert sind. An den Gleitelementen sind in Fahrzeugquerrichtung ausgerichtete Spriegel befestigt. Darüber hinaus ist die Faltdachmechanik mit an den Gleitelementen angeordneten Stützfedern versehen, deren freies Ende auf einen quer verlaufenden Faltspriegel einwirkt, und zwar mittels Vorspannung. Jede Stützfeder greift an einem schwenkbeweglichen Stützteil an, das am Gleitelement gelagert ist und den zughörigen Faltspriegel trägt.

In der DE 693 09 422 T2 wird ein Faltdach zum Schließen und Öffnen einer Dachöffnung in einem Aufbau wiedergegeben. Das einen flexiblen Dachbezug aufweisende Faltdach umfasst Hauptquerglieder und Zwischenquerglieder, die in Fahrzeugquerrichtung zwischen Längsbegrenzungen der Dachöffnung verlaufen. Die Zwischenglieder werden von Blattfedern getragen, die die Zwischenglieder in eine aufgestellte Stellung - Faltposition- zu bewegen suchen. Die jeweilige Blattfeder nimmt an einem Endbereich das entsprechende Zwischenglied auf. Der andere Endbereich ist an einem Führungsschuh befestigt, der in einer Längsschiene verschiebbar ist.

Die DE 10 2008 051 707 A1 offenbart einen Personenkraftwagen mit einem Faltverdeck, das mit einer Dachöffnung eines Aufbaus des Personenkraftwagens zusammenarbeitet. Ein Verdeckbezug des Faltverdecks wird von Führungsspriegeln und Faltspriegeln getragen. Die Führungsspriegel sind in entlang von Längsseiten der Dachöffnung verlaufenden Führungsschienen verschiebbar. Zwischen jedem Führungsspriegel und jedem Faltspriegel ist benachbart einer Längsseite der Dachöffnung ein Federelement wirksam, das den Faltspriegel bei geöffnetem Faltverdeck in eine aufgestellte Faltstellung bewegt. Das Federelement ist als Blattfeder dargestellt, die mit ihren Enden in Aufnahmen des Führungsspriegels und des Faltspriegels festgelegt ist.

Es ist Aufgabe der Erfindung, ein Faltverdeck mit Führungsspriegeln und durch Federelemente beeinflusste Faltspriegeln für einen Personenkraftwagen zu konzipieren, welche Federelmente die Faltspriegel gezielt zwischen einer abgesenkten Grundstellung und einer aufgestellten Faltstellung verstellen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Zusammenwirken des Steuerelements mit dem Federelement, angeordnet zwischen Führungsspriegel und Faltespriegel, auf vorbildliche Weise eine zwangsgesteuerte Beeinflussung des Federelements und folglich auch des Faltspriegels ermöglicht. Dank des Steuerelements wird in der Schließstellung des Faltverdecks der Faltspriegel über das Federelement musterhaft in der abgesenkten Grundstellung gehalten, wogegen in der Offenstellung des Faltverdecks das Steuerelement das Federelement lagemäßig freigibt, so dass es den Faltspriegel in seine aufgestellte Faltstellung verstellt. Die Grundstellung und die Faltstellung des Faltspriegels werden durch einfach realisierbare axiale Bewegungen des Steuerelements bewerkstelligt. Die Verbindung des Steuerelements mit dem Federelement über eine Ausnehmung in dem Träger des besagten Steuerelements und seine Führungsabschnitte für die Führungsaufnahmeabschnitte in der Führungsschiene lassen sich ebenso aufwandsarm umsetzen wie auch die Rasthakenvorrichtung des Steuerelements, die mit der Ausnehmung in der Führungsschiene zusammenwirkt. Sinngemäß trifft dies auch für den Hakenarm und die ihn beeinflussbare Schenkelfeder zu. Schließlich stellen der bewegliche Schlitten des Führungsspriegels mit dem Ausrückelement und das Stützelement am Hakenarm ein gezieltes Ausrücken des Hakenelements aus der Ausnehmung in der Führungsschiene sicher.

In der Zeichnung ist ein Ausführungsbeispiel der Erfindung dargestellt, das nachstehend näher erläutert wird.

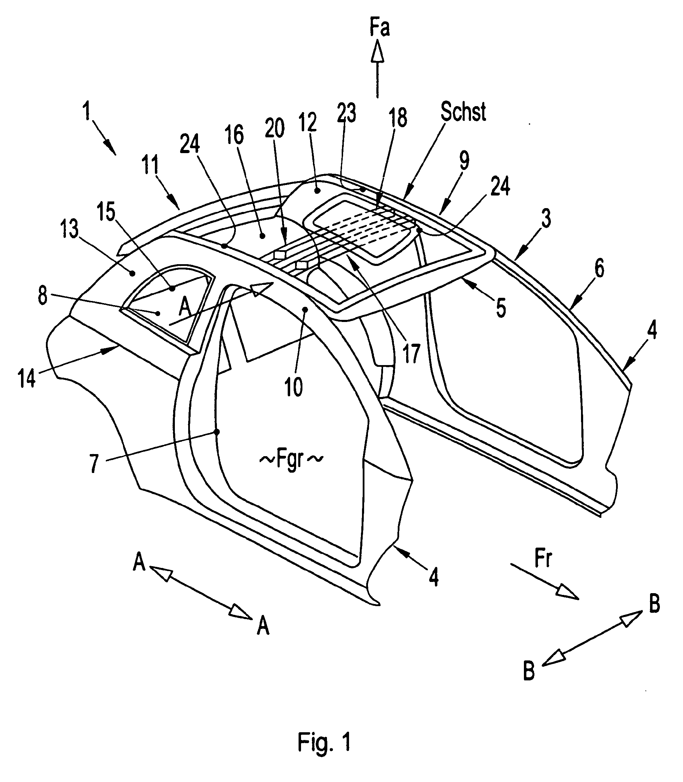

Es zeigen
Fig. 1 eine Schrägansicht von rechts oben auf einen schematisch abgebildeten Personenkraftwagen mit einem Faltverdeck,

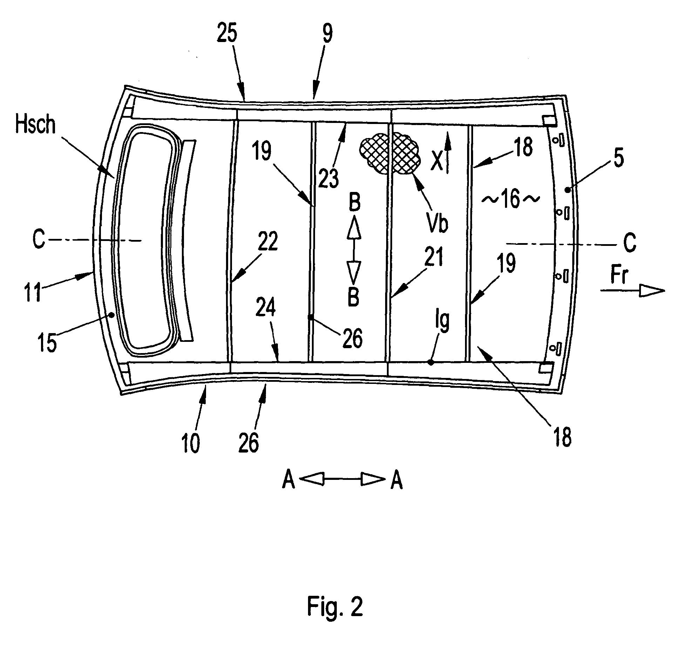

Fig. 2 eine Ansicht von oben auf das Dach des Personenkraftwagens gemäß Fig. 1,
Fig. 3 eine Teilansicht der Fig. 2 in Pfeilrichtung X in größerem Maßstab, wobei sich das Faltverdeck in einer Schließstellung und der Faltspriegel in einer abgesenkten Grundstellung befinden,
Fig. 4 eine Ansicht entsprechend Fig. 3, jedoch der Faltspriegel in einer Zwischenstellung,
Fig. 5 eine Ansicht entsprechend Fig. 2, jedoch mit zwei Faltspriegeln, wovon der eine Faltspriegel eine abgesenkte Zwischenstellung und der andere Faltspriegel eine aufgestellte Faltstellung einnehmen,
Fig. 6 eine Ansicht entsprechend Fig. 5, jedoch beide Faltspriegel in aufgestellter Faltstellung,
Fig. 7 Einzelheiten Y der Fig. 1 in größerem Maßstab,
Fig. 8 eine Schrägansicht auf das Steuerelement mit einem ein Stützelement und einen Anlaufnocken aufweisenden Hakenarm.

Von einem Personenkraftwagen 1 ist ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenträger 9 und 10. Letztere gehen in einem rückwärtigen Bereich 11 des Aufbaus 2 in Säulen 12 und 13 über und stoßen auf eine etwa horizontal verlaufende Gürtellinie 14 des Aufbaus 2. Die Dachseitenträger 9 und 10, der obere Querträger 5 und ein benachbart der Gürtellinie 14 verlaufendes hinteres Querteil 15 des Aufbaus 2 begrenzen eine Dachöffnung 16, in der ein bewegliches Dach 17 in Fahrzeuglängsrichtung A-A verschiebbar angeordnet ist; die Fahrtrichtung ist mit Fr bezeichnet und eine Heckscheibe mit Hsch.

Das Dach 17 ist nach Art eines einen Fahrgastraum Fgr überwölbenden Faltverdecks 18 aufgebaut, z. B. in der US 3,658, 378 und DE 807 874 beschrieben, und zwischen einer Schließstellung und einer Offenstellung bewegbar. In der Offenstellung des Faltverdecks 18 ist letzteres in Falten gelegt. Hierzu ist das Faltverdeck 18 mit einer Anzahl in Fahrzeugquerrichtung B-B verlaufender und in Fahrzeuglängsrichtung A-A beabstandeter stangenartiger Spriegel versehen. Letztere sind als Führungsspriegel 19 und 20 und als Faltspriegel 21 und 22 ausgeführt, wobei die Führungsspriegel 19 und 20 in Fahrtrichtung Fr betrachtet jeweils vor den Faltspriegeln 21 und 22 liegen. Die Führungsspriegel 19 und 20 sind von beiderseits einer Mittellängsebene C-C angeordneten Führungsschienen 23 und 24 aufgenommen, die benachbart von Längsseiten 25 und 26 der Dachöffnung 16 bzw. Dachseitenträger 9 und 10 verlaufen. Eine mögliche Ausführung der besagten Führungsschienen ist der DE 10 2008 051 707 A1 zu entnehmen. Darüber hinaus tragen die Führungsspriegel 19 und 20 und die Faltspriegel 21 und 22 einen Verdeckbezug Vb, der aus flexiblem Werkstoff besteht und in der Offenstellung des Faltverdecks 18 mittels besagter Spriegel in definierte Falten gelegt wird.

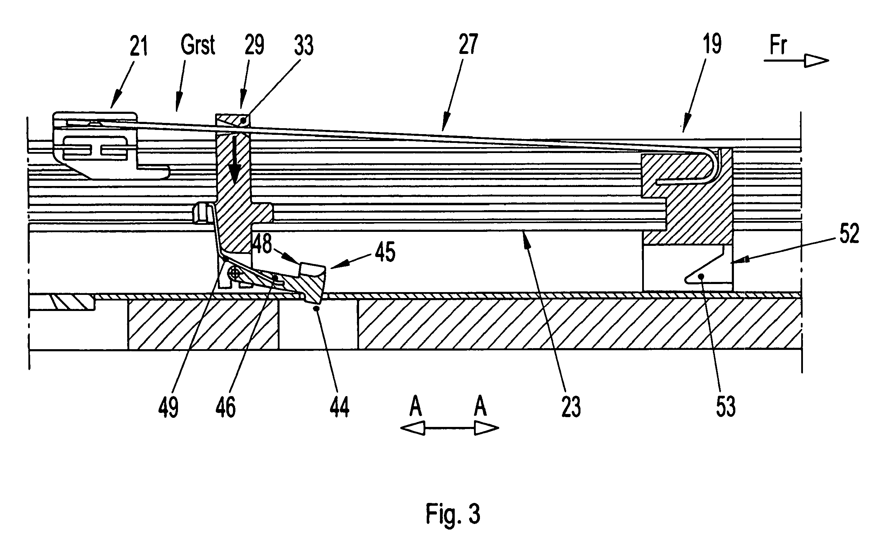

Die Faltspriegel 21 und 22 des Faltverdecks 18 werden mittels Federelementen 27 und 28 aus einer abgesenkten Grundstellung Grst -Fig. 3- in eine aufgestellte Faltstellung Fast verbracht. Die länglichen, stabartigen Federelemente 27 und 28 stehen mit Steuerelementen 29 und 30 in Wirkverbindung, die in der Schließstellung des Faltverdecks 18 die Federelemente 27 und 28 in der abgesenkten Grundstellung Grst halten. Dagegen werden die Federelemente 27 und 28 in der Offenstellung des Faltverdecks 18 mittels der Steuerelemente 29 und 30 freigegeben, damit sie die aufgestellte Faltstellung Fast für die Faltspriegel 21 und 22 einnehmen. Dabei beeinflussen die Steuerelemente 29 und 30 durch axiale Bewegungen in Fahrzeuglängsrichtung A-A die Federelemente 27 und 28 in Richtung Grundstellung Grst und Fast.

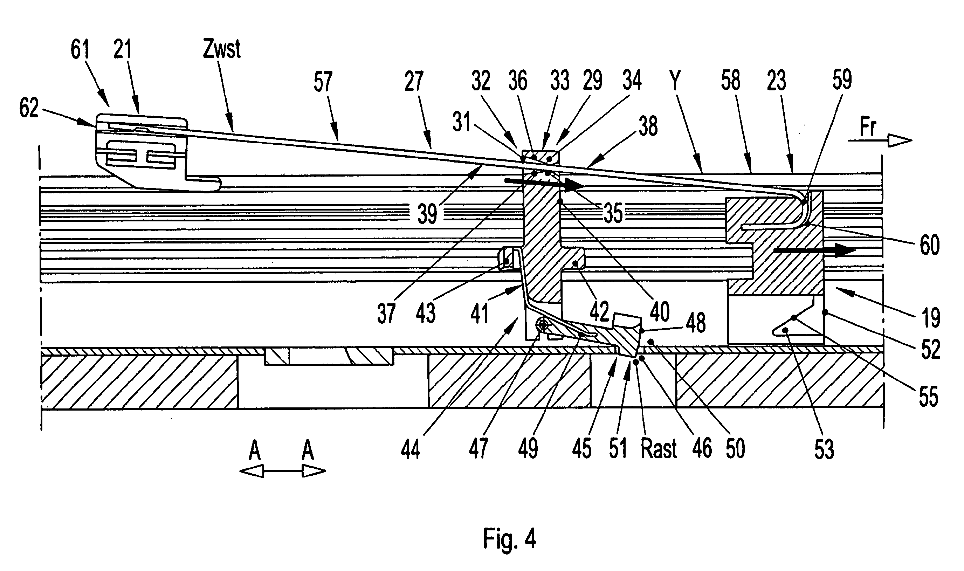

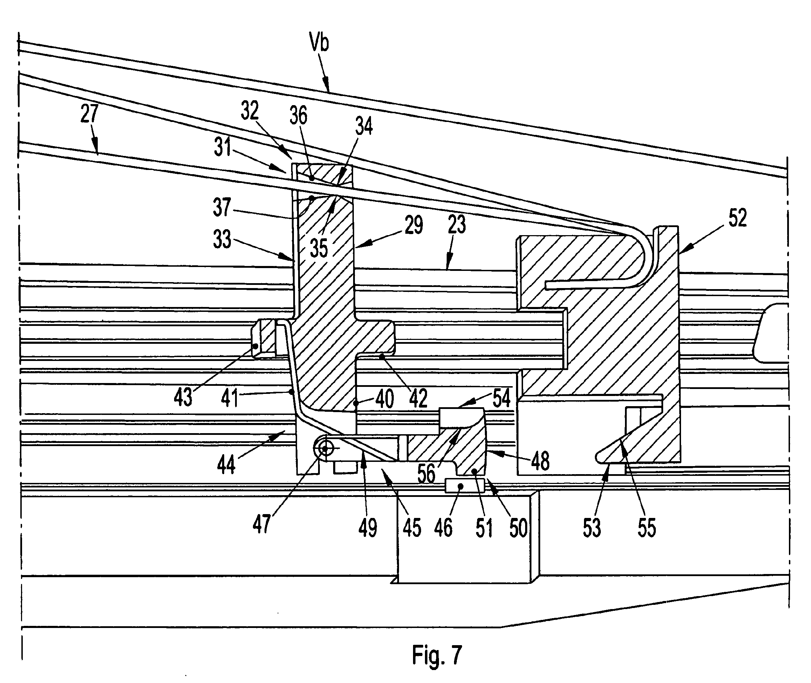

Jedes Federelement -z.B. 27- ist von einer rechteckigen Ausnehmung 31 allseitig umgeben, die an einem oberen Ende 32 eines säulenartigen Trägers 33 des zugehörigen Steuerelements 29 angeordnet ist -Fig. 4, 7 und 8. Durch die Ausnehmung 31 hindurchgeführt ist das Federelement 27, wobei die Relativbewegungen des Federelements 27 und des Steuerelements 29 durch Gleitnoppen 34 und 35 -Fig. 4 und 7- unterstützt werden, die an Ausnehmungsbegrenzungen 36 und 37 der Ausnehmung 31 angebracht sind und mit Wandabschnitten 38 und 39 des Federelements 27 zusammenwirken. Von aufrechten Begrenzungen 40 und 41 des Trägers 33 weggeführt sind Führungsabschnitte 42 und 43, die in Führungsabschnittsaufnahmen -nicht dargestelltder Führungsschiene 23 verschiebbar sind.

An einem unteren freien Ende 44 ist der Träger 33 des Steuerelements 29 mit einer Rasthakenvorrichtung 45 ausgestattet, die mit einer Ausnehmung 46 in der Führungsschiene 23 zusammenarbeitet. Die Rasthakenvorrichtung 45 ist mit einem am Träger 33 mittels einer Drehachse 47 angelenkten Hakenarm 48 versehen. Eine am Träger 31 befestigte Blattfeder 49 sucht den Hakenarm 48 in eine Raststellung Rast zu bewegen. An einem freien Ende 50 des Hakenarms 48 ist ein Hakenabschnitt 51 vorgesehen, der in der Raststellung Rast der Rasthakenvorrichtung 45 in die Ausnehmung 46 der Führungsschiene 23 eingreift und dadurch das Steuerelement 29 lagemäßig fixiert..

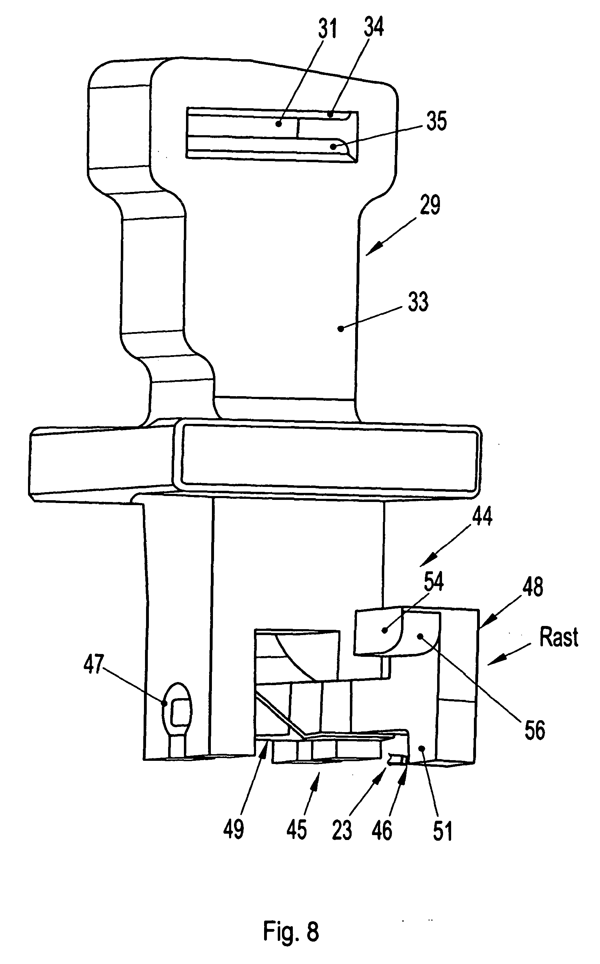

Der Hakenarm 48 wird mittels eines auf der Führungsschiene 23 beweglichen Schlittens 52 des Führungsspriegels 19 betätigt. An dem Schlitten 52 ist ein nasenförmiges Ausrückelement 53 angeformt, das in der Faltstellung Fast des Faltspriegels 20 den Hakenarm 48 über ein an letzterem vorgesehenes Stützelement 54 in Ausrückstellung Arst verstellt. Das Ausrückelement 53 ist als Steuerelement 55 und das Stützelement 54 ist als Anlaufnocken 56' ausgeführt -Fig. 7 und 8. Das Federelement 27 ist als Blattfeder 57 ausgebildet -Fig. 4, die an einem ersten Endbereich 58 eine etwa U-förmige Anformung 59 besitzt, die in einer annähernd korrespondierenden Aufnahme 60 ruht. Ein zweiter Endbereich 61 der Blattfeder 57 ist in einer Halteausnehmung 62 des Faltspriegels 21 festgelegt.

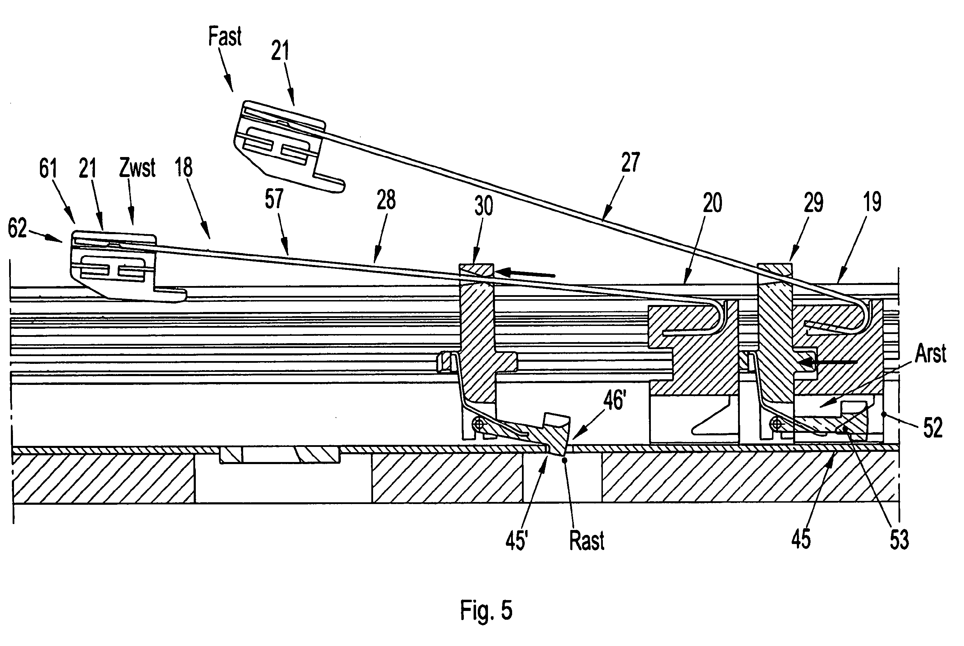

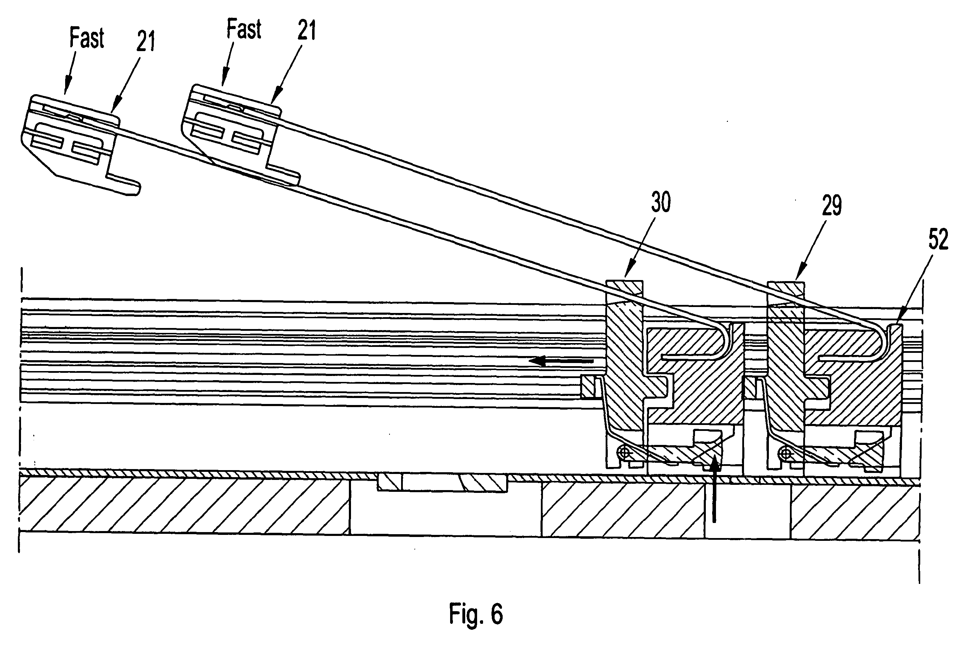

Die Fig. 3 gibt wieder, dass das Faltverdeck 18 die Schließstellung und der Faltspriegel 21 sowie das Federelement 27 die Grundstellung Grst einnehmen. In Fig. 4 ist der Schlitten 52 entgegen der Fahrtrichtung Fr bewegt, wodurch das Federelement 27 abschnittsweise in der Ausnehmung 21 verschoben ist und sich unter seiner Federwirkung teilweise in eine Zwischenstellung Zwst aufstellt. Fig. 5 zeigt sowohl die Führungsspriegel 19 und 20 wie auch die Faltspriegel 21 und 22, wobei sich der Faltspriegel 21 in der aufgestellten Faltstellung Fast befindet; der Faltspriegel 22 in der Zwischenstellung Zwst. Dabei ist die Rasthakenvorrichtung 45 des Steuerelements 29 über das Ausrückelement 53 des Schlittens 52 aus der Raststellung Rast in die Ausrückstellung Arst verbracht. Das Steuerelement 30 ist jedoch mittels der Rasthakenvorrichtung 45' in der Ausnehmung 46' festgelegt. Schließlich ist aus Fig. 6 ersichtlich, dass die Schlitten 52 und 52' der Führungsspriegel 19 bzw. 20 zusammengeführt und die Faltspriegel 21 und 22 die Faltstellung Fast einnehmen.

## Patentansprüche

1. Faltverdeck für einen Personenkraftwagen mit einem ein Dach aufweisenden Aufbau, welches zwischen einer Schließstellung und einer Offenstellung verstellbare Faltverdeck (18) mit einer Dachöffnung zusammenwirkt und einen von an Längsseiten der Dachöffnung angebrachten Führungsschienen (23) aufgenommenen Führungsspriegeln (19, 20) und Faltspriegelnlgen (21, 22) getragenen Verdeckbezug umfasst, wobei die Faltspriegel mittels Federelemente (27, 28) von einer abgesenkten Grundstellung in eine aufgestellte Faltstellung verbracht werden und die Federelemente sowohl an den Führungsspriegeln wie auch an den Faltspriegeln gehalten sind, **dadurch gekennzeichnet, dass** die Federelemente (27 und 28) mit Steuerelementen (29 und 30) in Wirkverbindung stehen, die in der Schließstellung des Faltverdecks (18) die Federelemente (27 und 28) in der abgesenkten Grundstellung (Grst) halten und dass in der Offenstellung des Faltverdecks die Steuerelemente (29 und 30) die aufgestellte Faltstellung (Fast) der Federelemente (27 und 28) freigeben.

2. Faltverdeck nach Anspruch 1, **dadurch gekennzeichnet, dass** die Steuerelemente (29 und 30) durch axiale Bewegungen in Fahrzeuglängsrichtung (A-A) die Federelemente (27 und 28) in Richtung Grundstellung (Grst) und Faltstellung (Fast) beeinflussen.

3. Faltverdeck nach Anspruch 2, **dadurch gekennzeichnet, dass** jedes Federelement (27, 28) von einer Ausnehmung (31) an einem oberen freien Ende (32) eines säulenartigen Trägers (33) des Steuerelements (29, 30) umgeben ist.

4. Faltverdeck nach Anspruch 3, **dadurch gekennzeichnet, dass** der Träger (33) des Steuerelements (29) mit Führungsabschnitten (42 und 43) in Führungsabschnittsaufnahmen der Führungsschiene (23) verschiebbar ist.

5. Faltverdeck nach Anspruch 3, **dadurch gekennzeichnet, dass** der Träger (33) des Steuerelements (29) an einem unteren freien Ende (44) mit einer Rasthakenvorrichtung (45) versehen ist, die mit einer Ausnehmung (46) in der Führungsschiene (23) zusammenarbeitet.

6. Faltverdeck nach Anspruch 5, **dadurch gekennzeichnet, dass** die Rasthakenvorrichtung (45) einen am Träger (33) mittels einer Drehachse (47) schwenkbar angebrachten Hakenarm (48) umfasst, den eine Blattfeder (57) in eine Raststellung (Rast) zu bewegen sucht.

7. Faltverdeck nach den Ansprüchen 5 und 6, **dadurch gekennzeichnet, dass** an einem freien Ende (50) des Hakenarms (48) der Rasthakenvorrichtung (45) ein Hakenabschnitt (51) vorgesehen ist, der in der Raststellung (Rast) der Rasthakenvorrichtung des Steuerelements (29) in die Ausnehmung (46) der Führungsschiene (23) eingreift.

8. Faltverdeck nach Anspruch 6 oder 7, **dadurch gekennzeichnet, dass** der Hakenarm (48) des Steuerelements (29) mittels eines auf der Führungsschiene (23) beweglichen Schlittens (52, 52') des Führungsspriegels (19; 20) beeinflussbar ist.

9. Faltverdeck nach Anspruch 8, **dadurch gekennzeichnet, dass** am Schlitten ein Ausrückelement (53) vorgesehen ist, das in der Faltstellung (Fast) des Faltspriegels (21) den Hakenarm (48) über ein an diesem angeordneten Stützelement (54) in eine Ausrückstellung (Arst) bewegt.

10. Faltverdeck nach Anspruch 9, **dadurch gekennzeichnet, dass** das Ausrückelement (53) als Steuerelement (55) und das Stützelement (54) als Anlaufnocken (56) ausgeführt sind.

11. Faltverdeck nach den Ansprüchen 1 und 8, **dadurch gekennzeichnet, dass** das Federelement (27; 28) als Blattfeder (57) ausgebildet ist, die einerseits mit einem ersten Endbereich (58) in einer korrespondierenden Aufnahme (60) des Schlittens (52) und andererseits mit einem zweiten Endbereich (60) in einer Halteausnehmung (61) des Faltspriegels (21; 22) festgelegt ist.

## Claims

1. Collapsible roof for a passenger vehicle with a vehicle body having a roof, which collapsible roof (18) which is displaceable between a closed position and an open position interacts with a roof opening and comprises a top cloth which is supported by guide bows (19, 20) and folding bows (21, 22) accommodated in guide rails (23) mounted on longitudinal sides of the roof opening, wherein the folding bows are brought by means of spring elements (27, 28) from a lowered basic position into an erected folding position and the spring elements are held both on the guide bows and on the folding bows, **characterized in that** the spring elements (27 and 28) are operatively connected to control elements (29 and 30) which, in the closed position of the collapsible roof (18), hold the spring elements (27 and 28) in the lowered basic position (Grst), and **in that**, in the open position of the collapsible roof, the control elements (29 and 30) release the erected folding position (Fast) of the spring elements (27 and 28).

2. Collapsible roof according to Claim 1, **characterized in that** the control elements (29 and 30) influence the spring elements (27 and 28) in the direction of the basic position (Grst) and folding position (Fast) by means of axial movements in the vehicle longitudinal direction (A-A).

3. Collapsible roof according to Claim 2, **characterized in that** each spring element (27, 28) is surrounded by a recess (31) at an upper free end (32) of a pillar-like support (33) of the control element (29, 30).

4. Collapsible roof according to Claim 3, **characterized in that** the support (33) of the control element (29) is displaceable by means of guide sections (42 and 43) in guide section mounts in the guide rail (23).

5. Collapsible roof according to Claim 3, **characterized in that** the support (33) of the control element (29) is provided at a lower free end (44) with a latching hook device (45) which cooperates with a recess (46) in the guide rail (23).

6. Collapsible roof according to Claim 5, **characterized in that** the latching hook device (45) comprises a hook arm (48) which is mounted pivotably on the support (33) by means of a rotary pin (47) and strives to move a leaf spring (57) into a latching position (Rast).

7. Collapsible roof according to Claims 5 and 6, **characterized in that** a hook section (51) is provided at a free end (50) of the hook arm (48) of the latching hook device (45), said hook section, in the latching position (Rast) of the latching hook device of the control element (29), engaging in the recess (46) of the guide rail (23).

8. Collapsible roof according to Claim 6 or 7, **characterized in that** the hook arm (48) of the control element (29) can be influenced by means of a slide (52, 52') of the guide bow (19; 20), which slide is movable on the guide rail (23).

9. Collapsible roof according to Claim 8, **characterized in that** a disengaging element (53) is provided on the slide and, in the folding position (Fast) of the folding bow (21), moves the hook arm (48) via a supporting element (54) arranged thereon into a disengaging position (Arst).

10. Collapsible roof according to Claim 9, **characterized in that** the disengaging element (53) is designed as a control element (55) and the supporting element (54) is designed as a run-on cam (56).

11. Collapsible roof according to Claims 1 and 8, **characterized in that** the spring element (27; 28) is designed as a leaf spring (57) which is fixed at one end by a first end region (58) in a corresponding mount (60) in the slide (52) and at the other end by a second end region (60) in a holding recess (61) of the folding bow (21; 22).

## Revendications

1. Toit escamotable pour un vehicule de transport de passagers dotée d'une carrosserie comprenant un toit, laquelle toit escamotable (18), qui peut être déplacée entre une position de fermeture et une position d'ouverture, coopère avec une ouverture de toit et comporte un revêtement de capote supporté par des arceaux de guidage (19, 20) et des arceaux pliants (21, 22) reçus par des rails de guidage (23) montés sur des côtés longitudinaux de l'ouverture de toit, les arceaux pliants étant amenés d'une position de base abaissée à une position pliée redressée au moyen d'éléments de ressort (27, 28) et les éléments de ressort étant maintenus à la fois sur les arceaux de guidage et sur les arceaux pliants, **caractérisée en ce que** les éléments de ressort (27 et 28) sont en liaison fonctionnelle avec des éléments de commande (29 et 30) qui, dans la position de fermeture de la toit escamotable (18), maintiennent les éléments de ressort (27 et 28) dans la position de base abaissée (Grst) et **en ce que**, dans la position d'ouverture de la toit escamotable, les éléments de commande (29 et 30) libèrent la position pliée redressée (Fast) des éléments de ressort (27 et 28).

2. Toit escamotable selon la revendication 1, **caractérisée en ce que** les éléments de commande (29 et 30) sollicitent les éléments de ressort (27 et 28) en direction de la position de base (Grst) et de la position pliée (Fast) par des déplacements axiaux dans la direction longitudinale du véhicule (A-A).

3. Toit escamotable selon la revendication 2, **caractérisée en ce que** chaque élément de ressort (27, 28) est entouré par un évidement (31) au niveau d'une extrémité libre supérieure (32) d'un support (33) de type colonne de l'élément de commande (29, 30).

4. Toit escamotable selon la revendication 3, **caractérisée en ce que** le support (33) de l'élément de commande (29) peut être coulissé à l'aide de sections de guidage (42 et 43) dans des logements de section de guidage du rail de guidage (23).

5. Toit escamotable selon la revendication 3, **caractérisée en ce que** le support (33) de l'élément de commande (29) est pourvu d'un dispositif de crochet d'encliquetage (45) au niveau d'une extrémité libre inférieure (44), lequel dispositif coopère avec un évidement (46) dans le rail de guidage (23).

6. Toit escamotable selon la revendication 5, **caractérisée en ce que** le dispositif de crochet d'encliquetage (45) comporte un bras de crochet (48) monté pivotant sur le support (33) au moyen d'un axe de rotation (47), lequel bras de crochet tend à déplacer un ressort à lame (57) dans une position d'encliquetage (Rast).

7. Toit escamotable selon les revendications 5 et 6, **caractérisée en ce qu'**une section de crochet (51) est prévue à une extrémité libre (50) du bras de crochet (48) du dispositif de crochet d'encliquetage (45), laquelle section de crochet vient en prise dans l'évidement (46) du rail de guidage (23) dans la position d'encliquetage (Rast) du dispositif de crochet d'encliquetage de l'élément de commande (29).

8. Toit escamotable selon la revendication 6 ou 7, **caractérisée en ce que** le bras de crochet (48) de l'élément de commande (29) peut être sollicité au moyen d'un chariot (52, 52'), mobile sur le rail de guidage (23), de l'arceau de guidage (19 ; 20).

9. Toit escamotable selon la revendication 8, **caractérisée en ce qu'**un élément de désaccouplement (53) est prévu sur le chariot, lequel élément de désaccouplement, dans la position pliée (Fast) de l'arceau pliant (21), déplace le bras de crochet (48) dans une position de désaccouplement (Arst) au moyen d'un élément d'appui (54) disposé sur celui-ci.

10. Toit escamotable selon la revendication 9, **caractérisée en ce que** l'élément de désaccouplement (53) est réalisé sous forme d'élément de commande (55) et l'élément d'appui (54) est réalisé sous forme de came de butée (56).

11. Toit escamotable selon les revendications 1 et 8, **caractérisée en ce que** l'élément de ressort (27 ; 28) est réalisé sous forme de ressort à lame (57) qui est fixé d'une part par une première région d'extrémité (58) dans un logement correspondant (60) du chariot (52) et d'autre part par une deuxième région d'extrémité (60) dans un évidement de retenue (61) de l'arceau pliant (21 ; 22).
